# EUROPÄISCHE PATENTSCHRIFT

(11) **EP 2 608 903 B1**
(45) Veröffentlichungstag und Bekanntmachung des Hinweises auf die Patenterteilung: **26.04.2017**
(21) Anmeldenummer: 11760722.6
(22) Anmeldetag: 25.08.2011
(51) Int. Cl.: B21D 13/02, B32B 3/30, B32B 15/01, B21D 26/021

(54) **MEHRSCHICHTIGES LEICHTBAUELEMENT MIT STRUKTURIERTEN SCHICHTEN**
MULTILAYER LIGHTWEIGTH CONSTRUCTION ELEMENT WITH STRUCTURED LAYERS
ÉLÉMENT DE CONSTRUCTION LÉGÈRE MULTICOUCHE AVEC COUCHES STRUCTURÉES

(30) Priorität: 27.08.2010 DE 102010036218
(43) Veröffentlichungstag der Anmeldung: 03.07.2013
(73) Patentinhaber: Brandenburgische Technische Universität Cottbus-Senftenberg, 03046 Cottbus (DE)
(72) Erfinder: SCHÖLZKE, Thomas, 03046 Cottbus (DE); CASAJUS, Alvaro, 15890 Eisenhüttenstadt (DE); FRITZSCHE, Sebastian, 03046 Cottbus (DE); GEORGI, Holger, 15890 Eisenhüttenstadt (DE); HARTMANN, Hans-Jörg, 15890 Eisenhüttenstadt (DE); MALIKOV, Viatcheslav, 03046 Cottbus (DE); MICHAILOV, Vesselin, 03046 Cottbus (DE); OSSENBRINK, Ralf, 03046 Cottbus (DE); SCHLEUSS, Leander, 03046 Cottbus (DE); VIEHWEGER, Bernd, 03046 Cottbus (DE)
(74) Vertreter: Hertin und Partner Rechts- und Patentanwälte PartG mbB
(86) Internationale Anmeldenummer: PCT/EP2011/064638
(87) Internationale Veröffentlichungsnummer: WO 2012/025594

(56) Entgegenhaltungen:
- EP-A1- 1 642 657
- DE-A1- 19 949 437
- DE-A1-102008 007 516
- US-A1- 2009 123 776
- SEBASTIAN FRITZSCHE, RALF OSSENBRINK, VESSELIN MICHAILOV: "Experimental Characterisation of Structured Sheet Metal", KEY ENGINEERING MATERIALS, SHEET METAL 2011, Bd. 473, 21. März 2011 (2011-03-21), Seiten 404-411, XP009153561,

## Beschreibung

Die Erfindung betrifft ein Schichtelement auch Leichtbauelement genannt, welches wenigstens zwei Schichten umfasst und mindestens eine erste Schicht eine strukturierte Schicht/Schale ist und die erste Schicht mit einer zweiten glatten und/oder strukturierten Schicht mindestens bereichsweise übereinander liegend verbunden ist, wobei die erste Schicht Versteifungselemente, insbesondere wabenförmiger (hexagonaler) Grundgeometrie, umfasst von Stegen, aufweist. Weiterhin betrifft die Erfindung die Verwendung des Schichtelements, bevorzugt im Karosseriebau, und das Verfahren zu dessen Herstellung. Im Stand der Technik ist offenbart, dass Steifigkeitseigenschaften von Konstruktionen durch die Verwendung von massiven Platten (z.B. Bleche) erhöht werden können. Es wird eine größere Festigkeit, Steifigkeit und Stabilität durch Erhöhung der Blechdicke erreicht. Hierbei ist jedoch nachteilig, dass die Erhöhung der Blechdicke zu einem höherem Gewicht führt, was für bestimmte Konstruktionen nicht toleriert werden kann.

Weiterhin ist im Stand der Technik beschrieben, dass die Steifigkeit durch das Aufbringen von steifigkeitserhöhenden Sicken und einzelnen Formelementen verbessert werden kann. Die Sicken und Elemente können beispielsweise durch eine Umformoperation in das Blech eingebracht werden. Nachteilig hierbei ist jedoch, dass diese Elemente aber nur eine lokale Wirkung im Hinblick auf die Steifigkeit aufweisen.

Faserverbundwerkstoffe, die üblicherweise aus zwei Komponenten bestehen (einer bettenden Matrix sowie einer verstärkenden Faser) werden im Leichtbau zur Gewichteinsparung verwendet. Die Hauptnachteile der meisten Faserverbundwerkstoffe liegen in der geringen Festigkeit, Steifigkeit, Wärmebeständigkeit, schlechterer Recyclingfähigkeit und Fertigungsautomatisierbarkeit.

Weiterhin sind im Stand der Technik Konstruktionen zur Gewichtsreduzierung offenbart, die einen sandwichartigen Aufbau, bestehend aus zwei Deckschichten und einer Kernschicht aufweisen. Die Kernschicht kann aus einem Kernmaterial, wie beispielsweise Kunststoffen, Papier, Fasern oder Wabenkernen geformt sein. Die Deckschichten dienen zur Sicherstellung der Steifigkeit und Formstabilität des Verbundes. Durch die Kernschicht werden der Abstand zwischen den Deckschichten eingestellt und Eigenschaften (z.B. schwingungsdämpfende, wärmeleitende Eigenschaften) des Sandwichs verändert. Weitere Baustrukturen, die als Sandwichkern eingesetzt werden sind aus DE 1659119 und DE 3900166 A1 bekannt. Hier wird ein Blech durch wechselseitig einprägende zylinderförmige Stempel verschiedenster Grundformen umgeformt. Es entstehen zu beiden Seiten hin ausgeprägte flache Spitzen, auf denen ein Deckblech angebunden wird. Zwischen den Zylinderstempeln bilden sich Freiformflächen, die sich frei zwischen den jeweiligen hoch- und runterdrückenden Stempeln ausbilden. Nachteilig hierbei ist, dass die Konstruktionen eine schlechte Recyclingfähigkeit, Fertigungsautomatisierbarkeit und aufwendige Fügbarkeit besitzen.

Eine besondere Ausgestaltung von Sandwichkonstruktionen ist das Schaumblech, bei dem die Kernschicht aus metallischem Schaum hergestellt wird. Diese Verbunde weisen ebenfalls die genannten Nachteile auf und benötigen eine hohe Wärmezufuhr für den Aufschäumprozess. Nachteilig in allen Sandwichverbunden ist die mangelhafte Steifigkeit und Stabilität des Kernwerkstoffes, welcher die Verwendung von zwei Deckschichten zusätzlich zur Kernschicht notwendig macht.

Im Stand der Technik sind weiterhin Sandwichstrukturen mit Wellblechkern offenbart. Als Kernschicht wird im Wesentlichen ein metallisches Wellblech eingesetzt. Ein Nachteil dieser Strukturen ist eine ausgeprägte biegeweiche Richtung längs zur Wellstruktur.

Weiterhin sind im Stand der Technik Bauelemente offenbart, bei denen durch konstruktive Maßnahmen versucht wird, die Steifigkeit zu verbessern. So beschreibt beispielsweise die DE 44 12 865 A1 ein Bauelement, welches aus mindestens zwei Blechen besteht, die miteinander verbunden sind, wobei wenigstens eine Schicht eine dreidimensionale Struktur, insbesondere eine Noppenstruktur, aufweist, welche in wenigstens zwei in der Schichtebene in einem Winkel zueinanderliegenden Richtungen durchbrochen wird. Durch den Schichtaufbau wird ein störendes Dröhnen oder Vibrieren der Bleche bei Belastung vermindert und ein leichtes Bauelement zur Verfügung gestellt. Nachteilig bei dem offenbarten Bauelement ist jedoch, dass die Schichten insbesondere durch den Durchbruch eine geringe Steifigkeit aufweisen, die die Einsatzmöglichkeiten des Bauelementes als tragendes Bauelement maßgeblich vermindern. Es kann beispielsweise nicht als Fassaden- und Dachelement genutzt werden. Außerdem hat sich gezeigt, dass das Bauelement eine für viele Anwendungen nur unzureichende Geräuschsisolierung besitzt.

Im Stand der Technik sind weiterhin Strukturen beschrieben worden, die aus nicht metallischen Komponenten bestehen, insbesondere thermoplastischen Platten. Des Weiteren sind Strukturmaterialien umfassend Bleche offenbart worden, die Versteifungselemente in Wabenform umfassen, die ebenflächige Bereiche bzw. Abschnitte (z. B. die ebenen senkrechten Wände oder Höhen/Mäntel der Waben bei honeycomb-Panelen) aufweisen (DE 10 2008 007 516 A1; EP 1 952 976 A1; DE 40 17 852 A1; DE 78 05 760 U1; US 2008/0166524 A1). Die im Stand der Technik offenbarten Strukturmaterialien weisen gegenüber den erfindungsgemäßen Strukturen, insbesondere gegenüber den Strukturblechen zahlreiche Nachteile auf. Die im Stand der Technik genannten Mittel sind weniger robust und im Langzeiteinsatz weniger belastbar. Es wäre beispielsweise nicht möglich, die bekannten Strukturen im Fahrzeugbau z. B. bei LKWs einzusetzen oder aber zur Herstellung von Containern zum Transport von Gütern.

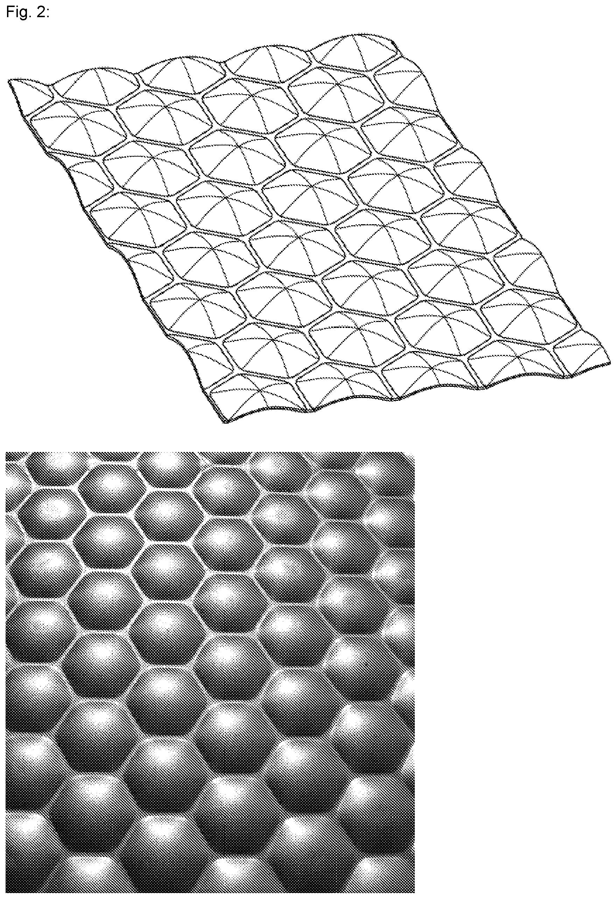

Sofern im Stand der Technik Strukturen mit einer wabenförmigen Versteifungsschicht beschrieben werden, so handelt es sich um zwei Bleche, die übereinander positioniert werden, so dass ein Zwischenraum zwischen diesen beiden entsteht und in diesem Zwischenraum im Wesentlichen senkrecht Stützelemente eingebracht werden, die die beiden schichtartigen Elemente voneinander beabstanden. Diese Stützelemente können untereinander so angeordnet sein, dass in der Draufsicht eine wabenförmige Struktur erkennbar ist. Derartige wabenförmige Strukturen sind am ehesten als Abstandshalter und Verbinder, beispielsweise zwischen zwei Aluminiumschichten zu verstehen. Strukturen, wie sie z. B. in der DE 40 17 852 A1 offenbart werden, sind keine Schalen im Sinne der Erfindung. Bei derartigen Waben des Standes der Technik handelt es sich beispielsweise um Nomex-Waben, die z. B. sechseckig sind und in rechtwinkligen Zellen mit ebenen Zwischenwänden hergestellt werden, die Sandwich-Strukturen ermöglichen, indem zwei glatte Schichten mittels Waben miteinander verbunden und beabstandet werden. Nomex-Waben sind aus Einzelelementen segmentiert und bilden daher keine Schalen, die aus ununterbrochenen, strukturierten Schichten gebildet sind (wie sie z. B. in Fig. 2 offenbart sind, welche eine Schale zeigt).

Ausgehend von diesem Stand der Technik ist es die Aufgabe der vorliegenden Erfindung, ein Element mit einer hohen Steifigkeit bereitzustellen, das nicht die Nachteile des Stands der Technik aufweist.

Gelöst wird die Aufgabe durch die unabhängigen Ansprüche. Vorteilhafte Ausführungsformen ergeben sich aus den Unteransprüchen.

Es war völlig überraschend, dass ein Schichtelement aus wenigstens zwei Schichten bevorzugt aus Blech, insbesondere aus Stahl, bevorzugt rostfreiem Stahl bereitgestellt werden kann, welches die Nachteile des Stands der Technik nicht aufweist, bei dem mindestens eine erste Schicht eine strukturierte Schale ist und die erste Schicht mit einer zweiten glatten oder strukturierten Schicht/Schale mindestens bereichsweise übereinander liegend verbunden ist und die erste Schicht Versteifungselemente insbesondere wabenförmiger (hexagonaler) Grundgeometrie, umfasst von Stegen, aufweist (siehe auch Fig. 2, die eine einzelne strukturierte Schicht zeigt, die auch als Schale bezeichnet werden kann). Die Erfindung betrifft daher in einem Aspekt ein Schichtelement aus wenigstens zwei Schichten (6, 7), wobei mindestens eine erste Schicht (6) eine strukturierte Schale (6) ist und diese mit einer zweiten glatten (7) oder strukturierten Schicht (7), die ebenfalls als Schale bezeichnet werden kann, mindestens bereichsweise übereinanderliegend verbunden ist, wobei die erste strukturierte Schicht (6) Versteifungselemente, insbesondere wabenförmige Formen im Wesentlichen ohne ebenflächige Abschnitte umfasst, die von Stegen (8) voneinander getrennt sind. Das Schichtelement zeichnet sich insbesondere dadurch aus, dass es aus bevorzugt mehreren strukturierten, mindestens ein wabenförmiges Versteifungselement aufweisenden Schichten und/oder glatten Schichten bzw. Schalen aufgebaut ist.

Dem Fachmann ist bekannt, wie Schichten, insbesondere flächige Schichten übereinander angeordnet werden, wobei zwischen den Schichten insbesondere bereichsweise ein Kontakt besteht, an dem die Schichten bevorzugt verbunden werden. Ein Kontakt beschreibt im Sinne der Erfindung insbesondere eine partielle oder vollständige Annäherung oder Kontaktherstellung der Schichten in wenigstens einem Punkt, beispielsweise durch Punktschweißen/Widerstandspunktschweißen.

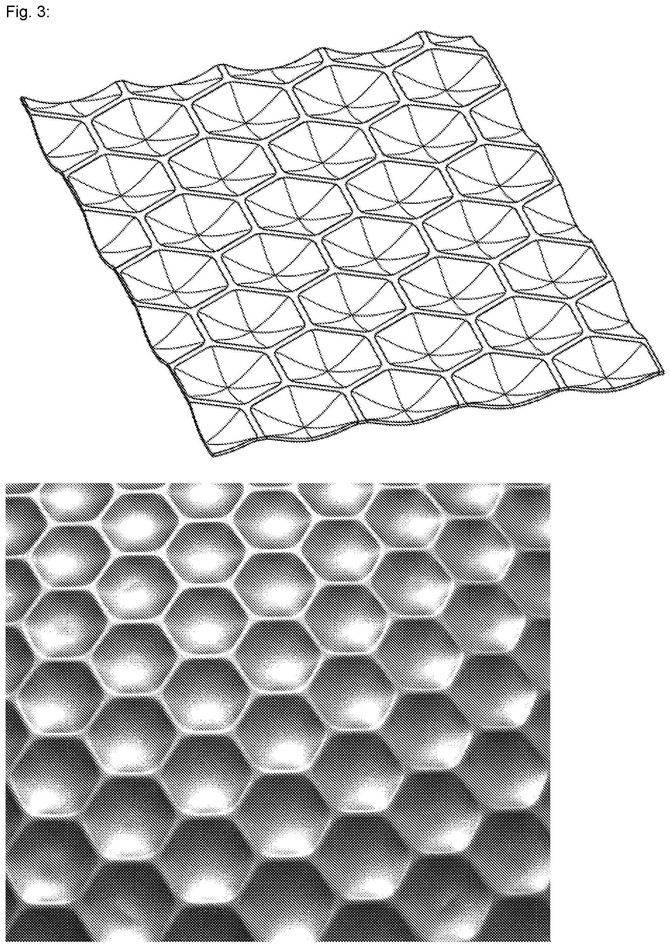

Eine strukturierte Schicht kann im Sinne der Erfindung insbesondere durch eine gezielte Formgebung insbesondere durch Einbringen von Versteifungselementen in die Schicht erzeugt werden. Eine solche strukturierte Schicht kann auch als ununterbrochene Schale oder einfach als Schale bezeichnet werden. Die Formgebung kann mittels dem Fachmann bekannten Fertigungsverfahren erfolgen. Bevorzugt erfolgt die Formgebung durch Umformverfahren, umfassend Schmieden, Eindrücken, Walzen, Strangpressen, Falten, Tiefziehen, Sicken, Bördeln, Richten (Fertigungsverfahren), Biegen, Recken oder Stauchen. Der Fachmann weiß, dass eine strukturierte Schicht eine positive oder negative Strukturlage aufweisen kann, wodurch die Ausprägungsrichtung der Struktur charakterisiert wird. Die Schichten, insbesondere die Bleche können eine unterschiedliche Strukturlage aufweisen. Im Sinne der Erfindung bezeichnet eine positive Strukturlage, wenn die Struktur insbesondere der Beanspruchungsrichtung zugewandt ist und eine negative Strukturlage entsprechend die entgegengesetzte Orientierung der Struktur. Es hat sich überraschenderweise gezeigt, dass durch die unterschiedlichen Strukturlagen Variationen der Schichten vorgenommen werden können. Insbesondere bei viellagigen bzw. vielschichtigen oder mehrschichtigen Leichtbauelementen oder Schichtelementen steigt die Variationsvielfalt insbesondere exponentiell an. Eine glatte oder im Wesentlichen glatte Schicht bezeichnet demgemäß eine Schicht/ eine Schale, die keine gezielte Formgebung in Form von Versteifungselementen aufweist. Im Sinne der Erfindung weist daher das Schichtelement bevorzugt zwei Blechschichten bzw. Blechschalen auf, wobei mindestens die erste Schicht eine strukturierte, aus einem Stück bestehende Schale (die auch als ununterbrochene Schale bezeichnet werden kann) - als einteiliges Element - ist und diese mit einer zweiten, glatten oder strukturierten Schicht/Schale bereichsweise oder vollständig - das bedeutet also mindestens bereichsweise - übereinanderliegend verbunden ist, wobei die erste strukturierte Schicht Versteifungselemente ohne ebenflächige Abschnitte und somit insbesondere wabenförmige Abschnitte ohne ebenflächige Abschnitte (wie z. B. in den Figuren 2 oder 3 gezeigt) umfasst, die von Stegen voneinander getrennt sind und die Dicken der Verbindungsorte die Dicken der beiden aufeinanderliegenden Schichten beinhaltet. Im Sinne der Erfindung können die Versteifungselemente alle Strukturen sein, die als zykloide Fläche definiert werden können. Dies bedeutet, dass beispielsweise die wabenförmigen Strukturen so ausgebildet sind, dass sie einen eiförmigen Querschnitt aufweisen und somit keine ebenflächigen Abschnitte. Die Beabstandung der Waben oder der entsprechend anders geformten Funktionselemente (z. B. Achtecke) erfolgt untereinander über Stege. Hierbei handelt es sich also um Bereich, in denen beispielsweise das Blech nicht umgeformt ist. Diese Bereiche können - je nach Herstellungsprozess - ggf. eben sein. Es ist bevorzugt, dass die beiden Bleche aus einem identischen oder sehr ähnlichen Material bestehen, wie z. B. Stahl. Je tiefer die Versteifungselemente, d. h. beispielsweise die Waben, ausgeprägt sind, umso stabiler ist das Versteifungselement. Es ist bevorzugt, dass die Verbindungsorte Schweißpunkte sind, da sich gezeigt hat, dass das punktförmige Verscheißen der beiden Stahlbleche zu besonders bevorzugten Schichtelementen führt. Die im Stand der Technik beschriebenen Strukturbleche, die aus einem einzigen Blech bestehen, sind in keiner Weise geeignet, das erfindungsgemäße Problem zu lösen. Das erfindungsgemäße Leichtbauelement/Schichtelement weist eine höhere Steifigkeit auf als die bekannten Schichtelemente.

Im Zusammenhang mit der Erfindung ist eine Schale (6), aus Sicht des Maschinenbaus, ein ebener und/oder gekrümmter flächiger Körper. Die Schale ist dadurch gekennzeichnet, dass die Dicke wesentlich kleiner ist als die übrigen Außenmaße (Länge mal Breite). Eine strukturierte Schale ist dadurch gekennzeichnet, dass aus der Ebene der Schale sich mehrfach wiederholende (mindestens zweimal) geometrische Formelemente abzeichnen. Diese werden durch umformende Verfahren eingebracht.

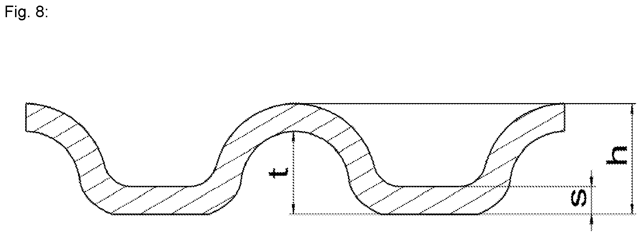

Die Versteifungselemente werden im Sinne der Erfindung durch ein geometrisches Formelement gebildet, wobei das geometrische Formelement eine lokale Veränderung der Blech/Schalengeometrie ist, die insbesondere durch einen Umformprozess entsteht. Die geometrischen Formelemente der strukturierten Schale können beispielsweise eine hexagonale Grundgeometrie haben. Die Formelemente weisen im Wesentlichen keine ebenen Abschnitte auf. Die Anordnung der Formelemente, beispielsweise der Waben, auf der Schalenebene, ist dadurch gekennzeichnet, dass jede Richtung in der Mittelebene der Schale durch Formelemente unterbrochen wird. Durch einen Umformprozess werden die Formelemente in die Schale eingebracht. Das Umformen kann insbesondere durch Hydroforming erfolgen. Insbesondere kann bei diesem Umformverfahren eine Gummimembran bzw. ein Elastomer eingesetzt werden. Diese Membran wird mit einem flüssigen oder gasförmigen Medium beaufschlagt. Die Oberfläche des Bleches kommt bei diesem Umformprozess nicht mit dem Medium in Kontakt. Ein nachfolgender Reinigungsschritt des Bleches/Schale ist nicht erforderlich. Selbstverständlich kann die Umformung auch mithilfe anderer Prozesse erfolgen. Die Verbindung der ersten Schale mit weiteren Schichten/Schalen erfolgt durch Fügen (z. B. DIN Norm 8593). Das Fügen kann durch unterschiedliche Verfahren erfolgen, beispielsweise durch Widerstandspunktschweißen. Durch diesen Fügeprozess wird aus zwei und/oder mehreren Schalen ein mehrschaliges/ mehrschichtiges Leichtbauelement/Schichtelement. Das bedeutet beispielsweise auch, dass Schalen insbesondere als Schichten bezeichnet werden können, wenn zwei und/oder mehrere ebene und/oder gekrümmte Schalen miteinander verbunden werden bzw. verbunden vorliegen. Als Schalendicke (s) wird die Dicke des ebenen und/oder gekrümmten Körpers (Schale) verstanden. Die Schichtdicke (h) ergibt sich aus der inneren Höhe des Formelementes (t) und der Schalendicke (s) (siehe auch Fig. 8). Die erfindungsgemäße Struktur hat als Leichtbauelement eine wesentlich höhere Steifigkeit als einzeln strukturierte Schalen der Dicke (s). Das Leichtbauelement im Sinne der Erfindung hat auch eine höhere Steifigkeit als eine ebene Schale mit der Dicke von (2*s). Die Steifigkeitseigenschaften der strukturierten Schale können über die Geometrie des Formelementes eingestellt werden. Es ist beispielsweise möglich, dass zwischen den Schalen verbleibende, durchgängige Hohlräume entstehen. Diese Hohlräume dienen der Funktionsintegration z. B. durch Kabeldurchführung, Durchleitungen von flüssigen und/oder gasförmigen Medien, Einbringung von Dämmmaterialien etc..

Es ist bevorzugt, wenn die beiden Bleche so miteinander verbunden sind, dass sie nicht zerstörungsfrei trennbar sind, wie z. B. im Falle von Punktschweißen oder Kleben. Auch wenn Bleche bevorzugte Materialien sind, können bei bestimmten vorteilhaften Ausführungsformen Folien verwendet werden, beispielsweise Alufolien.

Eine erste strukturierte Schicht kann mit weiteren (mindestens mit einer) strukturierten und/oder glatten Schichten verbunden werden. Die strukturierte Schicht stellt für sich eine flächige Schicht oder Schale mit bevorzugt Versteifungselementen dar. Die Versteifungselemente werden mit Hilfe von unterschiedlichen Umformverfahren in eine ebene oder gekrümmte Schicht, insbesondere der Oberfläche, eingebracht und weisen keine ebenen oder keine größer flächigen, ebenen Abschnitte auf. Die Versteifungselemente können im Sinne der Erfindung auch als Wabenstruktur bezeichnet werden.

Die Versteifungselemente erhöhen die Festigkeit, Steifigkeit und Stabilität der strukturierten Einzelschicht. Die Versteifungselemente sind so angeordnet, dass sie durch keine geradlinigen Richtungen unterbrochen sind, um eine leichte Verformbarkeit zu vermeiden. Im Schichtelement übernehmen die Versteifungselemente zusätzlich die abstandsbildende Funktion zwischen den Schichten, um die Festigkeit, Steifigkeit und Stabilität des Schichtelements weiter zur erhöhen. Die Versteifungselemente ermöglichen eine schnelle und einfache Verbindung der einzelnen Schichten.

Ein Versteifungselement bezeichnet im Sinne der Erfindung bevorzugt eine Struktur, die in eine Schicht, beispielsweise ein Blech, eingebracht oder auf diese aufgebracht ist und von einem Steg umfasst wird, wobei das Versteifungselement bevorzugt als eine dreidimensionale Struktur mit insbesondere wabenförmiger (hexagonaler) Grundgeometrie ausgestaltet ist. Es kann auch bevorzugt sein, ein mehreckiges oder n-eckiges Versteifungselement mit einer Kreisform in wenigstens eine Schicht zu integrieren. Experimente haben gezeigt, dass insbesondere wabenförmige Versteifungselemente eine quasi-isotrope Versteifung einer strukturierten Schicht bewirken, was derart nicht bei runden Versteifungselementen beobachtet werden kann. Hierdurch kann eine hohe Biegesteifigkeit und -festigkeit der Schichtelemente garantiert werden. Es hat sich außerdem gezeigt, dass die Integration der Versteifungselemente mit wabenförmiger (hexagonaler) Grundgeometrie die Schalen der Schichtelemente auch nach Fertigstellung schnell und einfach bearbeitbar sind. Es ist beispielsweise möglich, sie nach Fertigstellung zu schneiden, wodurch die Montage und Bearbeitung der Schichtelemente wesentlich vereinfacht ist.

Die Erfindung betrifft auch die überraschende Verwendung des erfindungsgemäßen Schichtelements als Leichtbauelement, insbesondere als Halbzeug. Die Integration von Versteifungselementen, die insbesondere eine wabenförmiger (hexagonaler) Grundgeometrie aufweisen, in eine Schicht ermöglichen die Nutzung des Schichtelementes als Leichtbauelement, das sich insbesondere durch ein geringes Gewicht und eine hohe Steifigkeit auszeichnet. Für die gezielte Einstellung der Steifigkeitseigenschaften des Leichtbauelementes für spezielle Erfordernisse bestehen bevorzugt folgende Variationsmöglichkeiten: Gestalt und Tiefe der Versteifungselemente, Werkstoff von den in den Leichtbauelement eingesetzten Schichten, Dicke der Schichten und/oder Anzahl der Schichten.

Die Einsatzbereiche des Leichtbauelementes liegen insbesondere in der Automobilindustrie, Schienenverkehrstechnik, im Bauwesen und in der Luft- und Raumfahrt. Als weitere Einsatzgebiete sind der Schiffbau, Behälter- und Anlagenbau, die Chemische Industrie, der Containerbau, Transportbehälterbau und die Energieerzeugung und -versorgung zu nennen. Das Leichtbauelement kann weiterhin als PKW Bodenschicht, Trennwand im Fahrzeugbau (beispielsweise Schiffsbau, Schienenfahrzeuge, Flugzeuge), Ladebordwand für LKW, Fahrzeugaufbauten (z. B. Pritschen, Koffer Kipper), Dachabdeckung, Fassadenverkleidung, Wärmetauscher, Wärmespeicher, Luft- und Flüssigkeitsmanagementsystem, Zentrifugengehäuse, Solarthermie, Sonnekollektor oder Treppe eingesetzt werden. Dem Fachmann sind weitere Verwendungsmöglichkeiten für Leichtbauelemente bekannt.

Überraschenderweise kann das Leichtbauelement/Schichtelement auch als Halbzeug verwendet werden. Halbzeuge stellen als "halbfertiges Material" ein wichtiges Element einer rationellen und kostengünstigen Fertigung dar. Sie werden in der Regel so ausgelegt, dass sie in Form und Abmessungen dem herzustellenden Produkt möglichst optimal entsprechen. Die Material- und Oberflächenqualitäten sind oft für bestimmte Einsatzzwecke und Fertigungsverfahren optimiert. Typisch für Halbzeuge ist, dass der erste Verarbeitungsschritt in einem Zuschnitt besteht, bei dem durch ein geeignetes Trennverfahren (z. B. Sägen) der benötigte Materialabschnitt abgetrennt wird. Dieser Abschnitt wird dann zu dem eigentlichen Fertigteil weiterverarbeitet. Es war völlig überraschend, dass die physikalischen Eigenschaften des erfindungsgemäßen Schichtelements bei dem Zuschnitt nicht verloren gehen. Durch die einfache Bearbeitbarkeit des Schichtelements kann es zu unterschiedlichen Fertigteilen verarbeitet werden. Vorteilhafterweise kann das Leichtbauelement als Bauelement, insbesondere als Bauelement, insbesondere Wandelement, Bodenelement, Deckenelement und/oder Element einer Karosserie verwendet werden. Es war völlig überraschend, dass ein Leichtbauelement, insbesondere bestehend aus einem strukturierten und einem strukturierten und/oder Glattblech eine derart hohe Steifigkeit und Stabilität aufweist, dass es als Bauelement, insbesondere Wand-, Boden- und/oder Deckenelement verwendet werden kann. Eine Karosserie bezeichnet im Sinne der Erfindung bevorzugt ein Bestandteil eines Fahrzeuges. Überraschenderweise kann das Schichtelement, insbesondere das Leichtbauelement als Bestandteil einer Karosserie verwendet werden. Das geringe Gewicht und die hohe Steifigkeit des Leichtbauelements vermitteln dem Fahrzeug besondere physikalische Eigenschaften, die außerdem eine hohe Wärme- und Geräuschisolierung bewirken. Es war völlig überraschend, dass die Schichten des Schichtelements, insbesondere die strukturierte Schicht eine vergrößerte Oberfläche aufweist, die insbesondere bei einem Energieaustausch wie beispielsweise einer Wärmeleitung besonders vorteilhaft ist. Die Verwendung des Schichtelements, insbesondere des Leichtbauelements als Bestandteil einer Karosserie ist besonders vorteilhaft. Das Schichtelement bewirkt, dass im Falle eine Unfalls ein Großteil der auf ein Fahrzeug treffenden Energie absorbiert wird, was auf die Kombination der strukturierten Schicht mit einer weiteren Schicht zurückzuführen ist, wobei die strukturierte Schicht Versteifungselemente, insbesondere wabenförmiger (hexagonaler) Grundgeometrie, umfasst von Stegen, aufweist. Durch die vergrößerte Oberfläche sowie den zwischen den Schichten entstehenden Hohlraum kann bevorzugt Energie absorbiert werden, wodurch eine Beschädigung der Karosserie sowie eine Verletzung der Fahrzeuginsassen vermindert werden können.

Das Leichtbauelement/Schichtelement weist ein geringes Gewicht auf und die Schalen können einfach zugeschnitten werden. Hierdurch kann das Leichtbauelement bevorzugt an Positionen oder Stellen verbaut werden, die insbesondere schwer zugänglich sind und die Integration eines leichten aber stabilen Bauelementes erfordern.

Es ist insbesondere bevorzugt, dass das Leichtbauelement/Schichtelement eine glatte Schicht umfasst, die beispielsweise verziert oder dekoriert werden kann. Das Leichtbauelement/Schichtelement kann auch als Deckenelement oder bevorzugt als Dachelement verwendet werden, da es leicht zu handhaben ist, eine hohe Steifigkeit aufweist und witterungsbeständig ist. Außerdem hat sich herausgestellt, dass es eine optimale Wärmeabschirmung und Geräuschdämmung aufweist, die insbesondere beim Bau von Häusern und beim Automobilbau wichtig ist. Die Geräuschdämmung und die Wärmeabschirmung sind insbesondere auf die wabenförmigen Versteifungselemente zurückzuführen, die mindestens eine Schicht des mehrschichtigen Schichtelements aufweist. Experimente haben außerdem gezeigt, dass wabenförmige Versteifungselemente eine bessere Steifigkeit als runde Elemente aufweisen. Es hat sich herausgestellt, dass die vorteilhaften Eigenschaften des Schichtelementes beziehungsweise des Leichtbauelementes erst durch die Kombination einer wenigstens ein Versteifungselement aufweisenden strukturierten Schicht mit einer weiteren strukturierten und/oder glatten Schicht entstehen. Vorteilhafterweise kann das Schichtelemente insbesondere das Leichtbauelement mehrere Schichten, insbesondere Bleche umfassen. Hierdurch kann die Steifigkeit des Elementes verbessert werden, ohne jedoch das Gewicht wesentlich zu erhöhen.

Die Erfindung betrifft weiterhin ein Verfahren zur Herstellung eines Leichtbauelements/Schichtelements, umfassend wenigstens zwei flächige Schichten, aufweisend folgende Schritte:
a. Bereitstellung einer aus einer strukturierten Schale bestehenden ersten Schicht und einer eine glatten und/oder strukturierten Schale bestehenden zweiten Schicht,
b. Verbinden der ersten und zweiten Schicht,
wobei die Schichten bereichsweise übereinander liegend verbunden werden und die erste Schicht wenigstens ein Versteifungselement insbesondere wabenförmiger (hexagonaler) Grundgeometrie, umfasst von Stegen, aufweist. Mindestens zwei flächige Schichten werden bevorzugt durch Fügeverfahren miteinander verbunden. Die Verbindung der Schichten erfolgt bevorzugt punktuell oder flächig, wobei die Verbindung insbesondere irreversibel ist. Es kann jedoch auch bevorzugt sein, die Schichten reversibel zu verbinden. Hierdurch ist es möglich beschädigte Schichten schnell auszutauschen oder zu reparieren. Eine Schicht weist eine strukturierte Schale , wobei wenigstens ein Versteifungselement insbesondere wabenförmiger (hexagonaler) Grundgeometrie, umfasst von Stegen eingebracht ist. Die erste Schicht kann mit einer zweiten glatten und/oder strukturierten Schicht verbunden werden. Es kann jedoch auch bevorzugt sein, mehr als zwei Schichten zu kombinieren. Durch die Versteifungselemente, insbesondere mit wabenförmiger (hexagonaler) Grundgeometrie, erreicht das Schichtelement eine hohe Steifigkeit, die eine Verwendung des Schichtelementes als Bauelement, bevorzugt Leichtbauelement und/oder Halbzeug ermöglicht. Vorteilhafterweise ist das Schichtelement aus Blech, bevorzugt strukturierten und/oder glatten Blechen gefertigt. Das Schichtenelement aus Blech kann bevorzugt im Automobilbau als Bauteil eingesetzt werden.

Die Erfindung betrifft auch ein Verfahren zur Herstellung eines Schichtelements aufweisend folgende Schritte:
a) Bereitstellung einer eine strukturierte Schale aufweisenden ersten Schicht (6), wobei die strukturierte Schale mittels Hydroforming erzeugt wird, und einer eine glatte oder strukturierte Schale aufweisenden zweiten Schicht (6, 7),
b) Verbinden der ersten und der zweiten Schicht (6, 7), wobei die Schichten bereichsweise übereinanderliegend verbunden werden und die erste/oder die zweite Schicht wenigstens ein Versteifungselement (9) insbesondere wabenförmiger (hexagonaler) Grundgeometrie umfasst von Stegen (8) aufweist und die beiden Schichten bevorzugt mittels Widerstandspunktschweißen miteinander verbunden werden.

Die wenigstens ein Versteifungselement mit wabenförmiger (hexagonaler) Grundgeometrie aufweisenden Schichten können vorteilhafterweise mittels einem Hydroforming-Verfahren (oder Innenhochdruckumformung) hergestellt werden. Bei dem Verfahren kann es sich in einer bestimmten Ausführungsform der Erfindung insbesondere um das Umformen insbesondere metallischer Werkstücke im geschlossenen Formwerkzeug mittels Innendruck handeln, der durch eine Wasser-Öl-Emulsion in das Werkzeug eingebracht wird. Wesentliche Prozessparameter bei dieser Ausgestaltung des Verfahrens sind dabei der Innendruck, der bei Serienfertigungen üblicherweise bis zu 4.000 bar betragen kann. Außerdem ist das Nachschieben von Material bzw. Stauchen von den Bauteilenden her mithilfe von Dichtstempeln ein wichtiger Parameter. Die Innendruckumformung kann weiterhin ein hydraulisches Tiefziehen, ein hydromechanisches Tiefziehen und ein aktives hydromechanisches Tiefziehen umfassen.

Es war völlig überraschend, dass die Einbringung von Versteifungselementen in eine Schicht und die Kombination dieser Schicht mit einer weiteren glatten oder strukturierten Schicht ein Schichtelement hervorbringt, was eine hohe Steifigkeit und ein geringes Gewicht aufweist. Außerdem ist das erfindungsgemäße Schichtelement durch Massenfertigungsverfahren herstellbar, wodurch die Produktionskosten und die Materialkosten erheblich reduziert werden können.

Die Versteifungselemente mit insbesondere wabenförmiger (hexagonaler) Grundgeometrie, umfasst von Stegen, die in eine strukturierte Schicht integriert werden und mit einer weiteren Schicht verbunden werden, vermittelt dem erfindungsgemäßen Schichtelement überraschende Effekte. So hat sich gezeigt, dass insbesondere die Wabenform zu einer maßgeblich verbesserten Wärmeabschirmung führt. Durch die erfindungsgemäßen wabenförmigen Schichten bilden sich innerhalb zweier Schichten Luftpolster, die eine optimale Wärmeisolierung bewirken, die derart im Stand der Technik für Schichtelemente nicht offenbart ist. Außerdem kann das erfindungsgemäße Schichtelement zur Geräuschdämmung genutzt werden, da die Luftpolster in Kombination mit den Schichten eine Schallreduzierung bewirken. Weiterhin können die Schichten insbesondere mittels den Stegen oder den Versteifungselementen einfach und kostengünstig verbunden werden. Es werden für die Verbindung bevorzugt keine weiteren Bauteile benötigt.

In einer weiteren bevorzugten Ausführungsform der Erfindung können weitere Versteifungselemente ausgewählt aus der Gruppe umfassend Strebungen, Profile, Winkel oder Sicken auf wenigstens einer Schicht aufgebracht werden. Durch die aufgebrachten zusätzlichen Versteifungselemente kann die Steifigkeit des Schichtelements wesentlich erhöht werden, wobei die Versteifungselemente bevorzugt den Abstand zwischen den übereinanderliegenden Schichten einstellen. Die Schichtelemente können so spezifisch an einen bestimmten Verwendungszweck angepasst werden.

Die Versteifungselemente weisen keine ebenen oder flächigen Abschnitte auf. Die strukturierte Schicht ist durch mindestens ein Versteifungselement gekennzeichnet, welches selbst keine ebenen oder keine größer flächigen, ebenen Abschnitte aufweist. Durch die Höhe der Versteifungselemente kann der Abstand zwischen den Schichten eingestellt werden. Die Integration einer strukturierten Schicht mit einer dreidimensionalen Geometrie in ein Schichtelement, führt zu einer hohen Festigkeit, Steifigkeit und Stabilität des Schichtelements in alle Richtungen. Das Schichtelement weist keine umformweiche Linie auf, so dass in allen möglichen Belastungsrichtungen eine hohe Steifigkeit gegeben ist. Was z.B. bei den im Stand der Technik beschriebenen Sandwichstrukturen mit Wellblechen nicht der Fall ist.

Die Schichten können aus einem metallischen und/oder nichtmetallischen Werkstoff gefertigt sein. Es ist weiterhin bevorzugt, dass eine Schicht aus einem eisenhaltigen und die andere Schicht aus einem nicht eisenhaltigen Material gebildet ist. In einer besonders bevorzugten Ausführungsform sind die Schichten als Metallblech, besonders bevorzugt Stahlblech ausgestaltet. Bleche sind insbesondere dünn gewalzte Bahnen aus Metall und können beispielsweise als Riffelbleche, Hammerschlagbleche, Glattbleche oder Lochbleche ausgeführt sein. Bleche werden vorteilhafterweise aus Materialien umfassend Stahl, Aluminium, Kupfer, Zink, Blei, Gold, Silber und/oder anderen Metallen gewalzt. Metallische Werkstoffe sind bevorzugt aus Metallen gefertigt, wobei Metalle chemische Elemente bezeichnen, die sich im Gegensatz zu den Nichtmetallen im Periodensystem links der diagonalen Trennungslinie beginnend mit dem Element Beryllium (2. Gruppe) bis hin zum Polonium (16. Gruppe) befinden, sowie deren Legierungen und intermetallische Verbindungen mit charakteristischen metallischen Eigenschaften.

Dem Fachmann sind Verarbeitungstechniken (beispielsweise Biegen oder Kanten) bekannt, mit welchen Bleche verformt werden können. Es kann vorteilhaft sein, Sicken in Bleche zu prägen, wodurch die Stabilität und die Belastbarkeit eines Bleches um ein Mehrfaches erhöht werden kann. Es kann weiterhin bevorzugt sein, die Schichten des Schichtelements mit unterschiedlichen Legierungen zu beschichten, um so beispielsweise die Witterungsbeständigkeit zu erhöhen. Die bevorzugten Bleche können nach ihrer Materialstärke in Feinstblech (bevorzugt bis 0,5 mm), Feinblech (bevorzugt 0,5 mm - 3 mm), Mittelblech (bevorzugt 3 mm - 4,75 mm) und Grobblech (bevorzugt mehr als 4,75 mm) unterschieden werden. Folien sind Schichtelemente bevorzugt mit weniger als 0,5 mm Materialstärke.

Vorteilhafterweise können strukturierte Einzelbleche mit strukturierten und/oder ebenen Blechen, die übereinander liegend angeordnet sind, kombiniert werden, wodurch unterschiedliche Variationen des Schichtelements generierbar sind. Werkstoffe, Blechdicken und Gestalt der Bleche sowie die Form oder Geometrie der n-eckigen Versteifungselemente können variiert werden, um adäquat auf Belastungssituationen und Einsatzbedingungen zu reagieren. Vorteilhafterweise können in das Schichtelement Bleche mit positiver sowie negativer Strukturlage integriert werden.

Die Erfindung gemäß der bevorzugten Ausführungsform kann somit als Kombinationserfindung angesehen werden, da Schichten, insbesondere strukturierte Bleche miteinander kombiniert werden, wobei wenigstens ein strukturiertes Blech wabenförmige Versteifungselemente aufweist. Die Kombination führt zu synergistischen Effekten, so dass ein Schichtelement bereitgestellt werden kann, welches eine hohe Steifigkeit aufweist, obwohl es lediglich aus zusammengefügten Blechen besteht. Der Fachmann findet im Stand der Technik keine Motivation oder einen Hinweis, dass die Kombination von strukturierten Blechen, die bereits an sich eine erhöhte Steifigkeit aufweisen, vorteilhaft wäre. Es war völlig überraschend, dass durch die erfindungsgemäße Kombination und die Integration von wabenförmigen Versteifungselementen, Schichtelemente gebildet werden können, die hohe Stabilitäts-, Steifigkeits- und Festigkeitseigenschaften erreichen. Das Schichtelement kann durch die erfindungsgemäßen Eigenschaften in zahlreichen Bereichen, wie z. B. Baubereich, Automobilbereich, Schienenverkehrstechnik, Schiffsbau, Luft- und Raumfahrt, Behälter- und Anlagenbau, chemische Industrie, Containerbau, Transportbehälterbau oder Energieversorgung eingesetzt werden.

Alternativ kann mindestens eine Schicht oder eine zusätzliche Schicht auf den zwei metallischen Schichten aber auch aus nichtmetallischen Materialien gefertigt werden. Für nicht-metallische Materialien können in einer bevorzugten Ausführungsform Polymere verwendet werden. Polymere bezeichnen, nach einer Definition der IUPAC ("The International Union of Pure and Applied Chemistry") eine Substanz, die sich aus einem Kollektiv chemisch einheitlich aufgebauter, sich in der Regel aber hinsichtlich Polymerisationsgrad, Molmasse und Kettenlänge unterscheidender Makromoleküle (Polymermoleküle) zusammensetzt. Bei solchen sogenannten polymereinheitlichen Stoffen sind also alle Makromoleküle gleich aufgebaut und unterscheiden sich lediglich durch ihre Kettenlänge (Polymerisationsgrad). Man kann derartige Polymere als Polymerhomologe bezeichnen. Polymere können anorganische Polymere, metallorganische Polymere, voll- oder teilaromatischen Polymeren, Homopolymere, Copolymere, Biopolymere, chemisch modifizierte Polymere und/oder synthetische Polymere umfassen. Bevorzugte Polymere sind beispielsweise Polyethylen, Polypropylen, Polyvinylchlorid, Polystyrol, Polymethylmethacrylat, Polyamid, Polyester, Polycarbonat, Polyethylenterephthalat, Polyethylenglykol, Dendrimere oder Silikone.

Es kann auch bevorzugt sein, strukturierte und glatte Schichten aus Kohlenstoff insbesondere Karbon- oder Graphitfasern zu fertigen, die z. B. auf die Bleche aufgetragen werden oder aber diese ganz oder teilweise ersetzen. Die aus diesen Materialien gefertigte Schicht stellt einen technischen Fortschritt dar, da das Material eine hohe Langlebigkeit aufweist. Die Schichten sind bis zu hohen Temperaturen hochfest und circa viermal leichter als Stahl. Außerdem sind die bevorzugten Schichten korrosionsbeständig und zugfest. Die Kohlenstoffschichten können leicht bearbeitet werden und sind günstig herstellbar.

In einer bevorzugten Ausführungsform werden die Schichten irreversibel, insbesondere nicht-lösbar verbunden. Vorteilhafterweise können die Schichten, insbesondere die Bleche durch Fügen verbunden werden. Fügen bezeichnet im Sinne der Erfindung insbesondere das Verbinden fester Schichten unter Zuhilfenahme von formlosen Stoffen und umfasst Füllen, Pressen, Umgießen, Schweißen, Löten oder Kleben. Das Fügen bevorzugt nach der DIN-Norm DIN 8593 umfasst weiterhin Verbindungstechniken und Verbindungselemente wie beispielsweise Schrauben, Nieten oder Clinchen. Durch das Fügen der Schichten, insbesondere der Bleche entsteht das Schichtelement, was einen hohen Widerstand gegen Verformung durch Kräfte oder Momente aufweist.

Das Schichtelement kann weiterhin mit einer weiteren Schicht, insbesondere einer Deckplatte (beispielsweise ein Deckblech oder eine Deckschicht) ausgestattet werden. Hierbei ist es besonders bevorzugt, wenn die Deckplatte auf die erste und/oder zweite Schicht aufgebracht wird. Die Deckplatte kann beispielsweise als Deckblech ausgestaltet sein, das mit dem Schichtelement verbindbar ist. Die Deckplatte kann beispielsweise eine Schutzfunktionen ausüben und/oder als Korrosionsschutz dienen. Dies kann insbesondere vorteilhaft sein, wenn das Schichtelement im Freien aufgestellt oder angebracht wird. Vorteilhafterweise kann die Deckplatte auch mit einem Design versehen werden, das zur Kennzeichnung oder Verzierung des Schichtelements dient. Außerdem kann durch die Anbringung einer oder mehrere Deckplatten die Steifigkeit des Schichtelements verbessert werden. Die Verwendung von einem oder zwei glatten Blechen als Deckblech ergibt einen weiteren Steifigkeitszuwachs bei minimaler Gewichtszunahme.

Vorteilhafterweise kann zwischen der ersten und zweiten Schicht mindestens ein Hohlraum bestehen. Die Schichten, insbesondere die strukturierten Schichten können so zu einander positioniert werden, dass ein im Wesentlichen durchgehender Hohlraum in dem Schichtelement gebildet wird. Der Hohlraum kann vorteilhafterweise zur Einbringung von Elementen, umfassend Sensoren, Kühlleitungen, Leitungen, Kabel oder sonstigen Elementen verwendet werden. Es kann auch bevorzugt sein, isolierende, schalldämmende, Kräfte und/oder Momente absorbierende und/oder aufnehmende Materialien mit unterschiedlichem Aggregatzustand in den Hohlraum zu integrieren. Auch kann der Hohlraum bevorzugt zum Durchfluss von gasförmigen oder flüssigen Medien genutzt werden. Es war völlig überraschend, dass die Elemente ohne weitere Bearbeitungsmaßnahmen (Funktionsintegration) in den Hohlraum integriert werden können. Vorteilhafterweise erfolgt die Einbringung der Elemente in den Hohlraum so, dass diese von außen nicht sichtbar sind. Dies ist besonders vorteilhaft, wenn das Schichtelement in einem Gebäude oder Fahrzeug verwendet wird.

Es hat sich weiterhin überraschenderweise gezeigt, dass durch die wabenförmigen Versteifungselemente, die bevorzugt eine hexagonale Grundform aufweisen, in dem Schichtelement mehrere durchgängige Hohlräume gebildet werden, die insbesondere durch die wabenförmige Struktur von außen nicht beeinflussbar sind. Somit können druckempfindliche Elemente, wie beispielsweise elektrische und/oder elektronische Elemente in die Hohlräume eingebaut werden, ohne dass die Gefahr besteht, dass die Elemente beschädigt werden. Dies eröffnet ein neues technisches Gebiet, da das bevorzugte Schichtelement als Bauteil nutzbar ist, welches eine hohe Stabilität trotz geringem Gewicht aufweist und in das elektrische und/oder elektronische Elemente integrierbar sind. Insbesondere im Fahrzeugbau, wo ein geringes Gewicht und eine hohe Stabilität erforderlich ist, kann das bevorzugte Schichtelement verbaut werden.

Vorteilhafterweise weist das Schichtelement in einer bevorzugten Ausführungsform mindestens eine Schicht auf, die wenigstens partiell gelocht ist. Die Lochung kann mit dem einem Fachmann bekannten Verfahren durchgeführt werden. Eine Lochung kann in Form einer Rundlochung, Quadratlochung, Sechsecklochung, Langlochung, Zierlochung und/oder Sonderlochung erfolgen. Die Lochung der Schicht kann vorteilhafterweise durch folgende Herstellungsverfahren erreicht werden: Breitpresse, Streifenpresse, Stanzautomat, Lasern/Wasserstrahl/Brennschneiden und/oder Walzenperforation. Die Lochform und die Anordnung der Löcher zueinander kann durch die Herstellungsverfahren variiert werden.

Weiterhin ist bevorzugt, dass wenigstens eine der Schichten des Schichtelements eine Folie ist. Eine Folie bezeichnet im Sinne der Erfindung insbesondere ein bevorzugt sehr dünnes Metall- oder Kunststoffblatt. Vorteilhafterweise ist Folie eine Streckfolie. Streckfolien weisen in wenigstens zwei Richtungen durchbrochene Strukturen auf, die sich auch je nach gewünschter Funktion variieren lassen. Darüber hinaus ist bevorzugt, dass wenigstens eine der Schichten eine Mehrschichtstreckfolie ist. Streckfolien können mehrschichtig gepresst werden, wodurch sich die Einzelsegmente verkrallen. Dadurch lassen sich sehr leichte, aber dicke und gut verformbare Schichten herstellen. Die gepressten Streckfolien können einfach und schnell miteinander verbunden werden. Dies kann beispielsweise durch Löten oder Kleben geschehen. Es ist weiterhin bevorzugt, dass die Streckfolien PE-beschichtet (Polyethylen) sind. Dadurch kann nach dem Pressen des Streckfolienverbundes eine einfache Verklebung bewirkt werden.

Die Erfindung wird nunmehr anhand von Figuren beispielhaft beschrieben, ohne jedoch auf diese beschränkt zu sein; es zeigt:
- Fig. 1: beispielhafte Darstellung Herstellung einer bevorzugten Ausführungsform
- Fig. 2: beispielhafte Darstellung Strukturiertes Schale/Blech - Strukturlage positiv
- Fig. 3: beispielhafte Darstellung Strukturiertes Schale/Blech - Strukturlage negativ
- Fig. 4: beispielhafte Darstellung Bevorzugte Ausführungsform umfassend die Schichten strukturierte(s) Schale/Blech und unstrukturierte Schale/Glattblech
- Fig. 5: beispielhafte Darstellung Bevorzugte Ausführungsform umfassend die Schichten unstrukturierte Schale/Glattblech, strukturierte(s) Schale/ Blech und unstrukturierte Schale/Glattblech
- Fig. 6: beispielhafte Darstellung Bevorzugte Ausführungsform umfassend die Schichten strukturierte(s) Schale/ Blech und strukturierte(s) Schale/ Blech
- Fig. 7: beispielhafte Darstellung Bevorzugte Ausführungsform umfassend die Schichten strukturierte(s) Schale/Blech, strukturierte(s) Schale/ Blech, strukturierte(s) Schale/ Blech und strukturierte(s) Schale/ Blech
- Fig. 8: beispielhafte Darstellung Teilsegment Schale

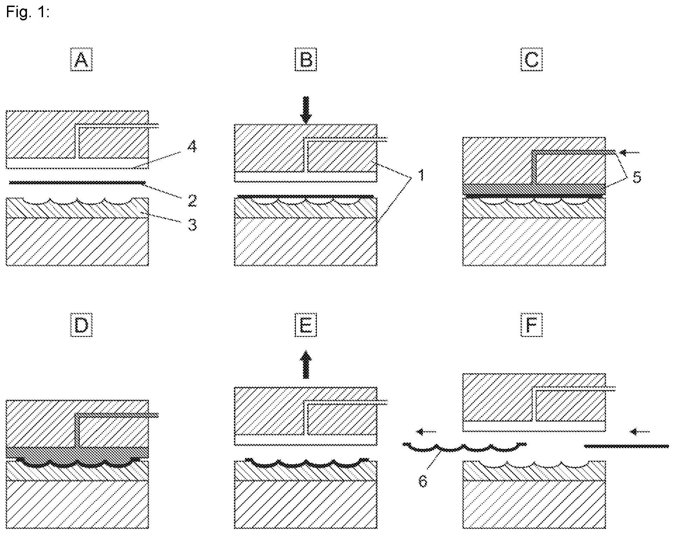

Fig. 1 zeigt eine bevorzugte Herstellung einer Ausführungsform der Erfindung. Hierbei wird eine Materialbahn 2, insbesondere ein(e) unstrukturierte Schale/Glattblech 7 mittels Hydroforming-Verfahren in ein strukturierte(s) Schale/ Blech umgeformt bzw. ein strukturierte(s) Schale/ Blech hergestellt. Die Matrize 3 kann sich im oberen oder unteren Bereich der Hydroforminganlage befinden. Entsprechend der abgebildeten Anordnung befindet sich die Membran 4 oberhalb der Matrize 3. Über der Membran 4 mit dem Wirkmedium 5 befindet sich ein Niederhalter welcher beim Umformen der Materialbahn 2 ein Öffnen des Werkzeuges 1 verhindert. Die umzuformende Materialbahn 2, wird bei beiden Möglichkeiten zwischen Matrize 3 und Membran 4 mit Wirkmedium 5 eingelegt. Das Werkzeug 1 wird hydraulisch geschlossen. Im Anschluss wird die Membran 4 mit dem Wirkmedium 5 beaufschlagt. Der Druckanstieg des Wirkmediums 5 bewirkt eine Ausdehnung der Membran 4. Diese dehnt sich im schmalen Hohlraum zwischen Niederhalter und Matrize 3 aus. Steigt der Druck des Wirkmediums 5 weiter an so drückt dieser die Materialbahn 2 in die Matrize 3. In der Materialbahn 2 bilden sich mit steigendem Druck die Versteifungselemente mit insbesondere wabenförmiger (hexagonaler) Grundgeometrie umfasst von Stegen, in den Vertiefungen der Matrize 4, insbesondere Stahlmatrize, aus. In diesem Fall formt sich die Materialbahn 2, insbesondere ein(e) unstrukturierte Schale/Glattblech 7, in ein(e) strukturierte(s) Schale/Blech 6 mit Versteifungselementen, insbesondere wabenförmiger (hexagonaler) Grundgeometrie umfasst von Stegen aus. Es besteht insbesondere auch die Möglichkeit, ein(e) strukturierte Schale/Strukturblech 6 ohne die Verwendung einer Membran 4 herzustellen, wobei hierfür das Formwerkzeug gut abgedichtet sein muss.

Fig. 2 stellt eine Darstellung eines strukturierten Schale/Blechs mit einer positiven Strukturlage dar, wohingegen Fig. 3 ein strukturiertes Schale/Blech mit einer negativen Strukturlage aufzeigt. Die Schalen, insbesondere die Bleche können eine unterschiedliche Strukturlage aufweisen. Im Sinne der Erfindung bezeichnet eine positive Strukturlage, wenn die Struktur insbesondere der Beanspruchungsrichtung zugewandt ist und eine negative Strukturlage entsprechend die entgegengesetzte Orientierung der Struktur. Es hat überraschenderweise gezeigt, dass durch die unterschiedlichen Strukturlagen Variationen der Schichten vorgenommen werden können. Insbesondere bei viellagigen bzw. vielschichtigen oder mehrschichtigen Leichtbauelementen oder Schichtelementen steigt die Variationsvielfalt insbesondere exponentiell an.

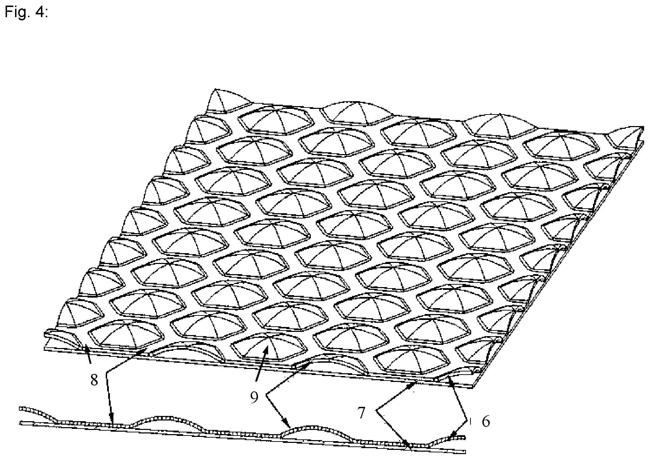

Die Fig. 4 bis Fig. 7 zeigen bevorzugte Ausführungsformen der Erfindung und deren Schnittdarstellungen. Fig. 4 zeigt ein bevorzugtes Leichtbauelement/Schichtelement, umfassend eine strukturierte Schicht, insbesondere ein(e) strukturierte Schale/Strukturblech 6 und eine unstrukturierte Schale, insbesondere ein Glattblech 7. Das Leichtbauelement/Schichtelement besteht aus zwei Schichten, wobei das/die strukturierte Schale/Strukturblech 6 bereichsweise mit dem unstrukturierten Schale/Glattblech 7 übereinander liegt. Das Strukturblech weist Versteifungselemente 9, insbesondere wabenförmiger (hexagonaler) Grundgeometrie, umfasst von Stegen 8 auf. Das Schichtelement kann vorteilhafterweise als Halbzeug und/oder Leichtbauelement verwendet werden.

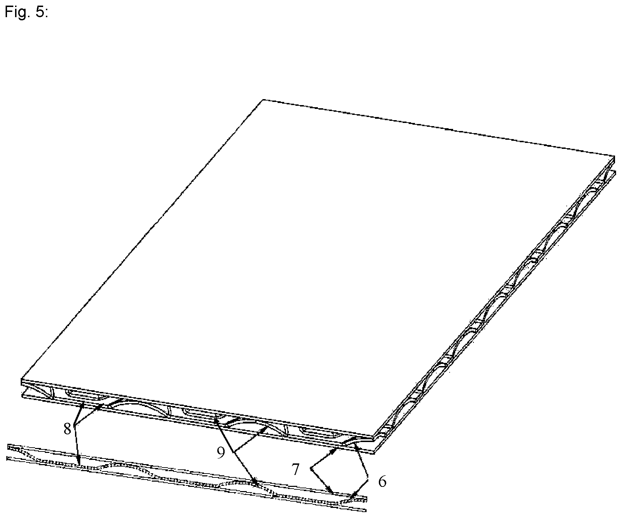

Die Fig. 5 stellt ein Leichtbauelement/Schichtelement dar, welches aus einem unstrukturierten Schale/Glattblech 7, einem strukturierten Schale/Blech und einem weiteren unstrukturierten Schale/Glattblech besteht. Das Schichtelement umfasst drei Schichten 7, 6, 7, wobei die/das strukturierte Schale/Strukturblech mit den beiden weiteren Schichten 7, die unstrukturierte Schalen darstellen, bereichsweise übereinander liegend verbunden ist. Die/Das strukturierte Schale/Strukturblech 6 weist Versteifungselemente 9 insbesondere wabenförmiger (hexagonaler) Grundgeometrie, umfasst von Stegen 8, auf. Durch die bevorzugte Kombination wird ein Leichtbauelement/Schichtelement gebildet, welches eine hohe Steifigkeit und ein geringes Gewicht aufweist, wobei das Leichtbauelement/Schichtelement auch als Halbzeug verwendet werden kann. Die Versteifungselemente 9 mit insbesondere wabenförmiger (hexagonaler) Grundgeometrie und die Stege 8 bewirken, dass eine stabile Verbindung zwischen den Schalen/Blechen 7, 6, 7 herstellbar ist, aber hierdurch nicht die überraschenden Eigenschaften der strukturierten Schale 6 beeinflusst werden. Zwischen den Schalen/Blechen 7 bilden sich, bedingt durch die Versteifungselemente, insbesondere die Versteifungselemente 9 mit wabenförmiger Grundgeometrie, ein Luftpolster, was eine überraschende Isolierung bezüglich Wärme und Geräuschen bewirkt. Somit kann das bevorzugte Schichtelement als Bauelement, insbesondere Leichtbauelement eingesetzt werden, da es eine hohe Steifigkeit und ein geringes Gewicht aufweist und zusätzlich optimale Isolierungseigenschaften besitzt. Außerdem können die durch die Versteifungselementen, insbesondere die wabenförmigen Versteifungselemente 9 gebildeten Hohlräume zur Integration von insbesondere Kabeln oder weiteren Elementen genutzt werden. Beispielsweise können Rohrleitungen in den Hohlräumen verlaufen, die mit unterschiedlichen Medien gefüllt sein können. Hierdurch sind die Schichtelemente oder Leichtbauelemente z. B. auch als Fußbodenheizung nutzbar. Weiterhin können insbesondere die unstrukturierten Schalen/Glattbleche 7 einfach und schnell beschichtet werden, falls das bevorzugte Schichtelement als beispielsweise Wand genutzt werden soll. Es können Verzierungen oder funktionelle Elemente an dem Glattblech angebracht werden. Auf die unstrukturierten Schalen/Glattbleche 7 können Werbung in Form von Magnettafeln, Airbrush oder Folien aufgebracht werden. Außerdem können sie als Schutz für Transport- und Schüttgütern gegen z. B. Verschmutzungen dienen. Ein weiterer Vorteil der Schichtelemente, insbesondere der unstrukturierten Schalen/Glattbleche 7 ist, dass Kräfte und Momente nicht punktuell angreifen sondern flächig verteilt werden. Weiterhin können Anbauteile bspw. Beschläge oder Halbzeuge die eine ebenflächige Auflage benötigen, leicht durch verschiedene Fügeverfahren an dem Schichtelement, insbesondere dem unstrukturierten Schale/Glattblech 7 befestigt werden. Weitere Vorteile des Schichtelements umfassen eine schnelle Ableitung von flüssigen Medien beispielsweise Regenwasser, eine Vermeidung von Staunässe und Korrosion, eine flächige Auflage von Transportgut beispielsweise Paletten, einfache Lackierung, Beschichtung und/oder Pulverbeschichtung, bessere Begehbarkeit, besseres Standverhalten von Paletten, Leitern oder Kisten und bessere Befahrbarkeit mit beispielsweise Hubwagen oder Sackkarre.

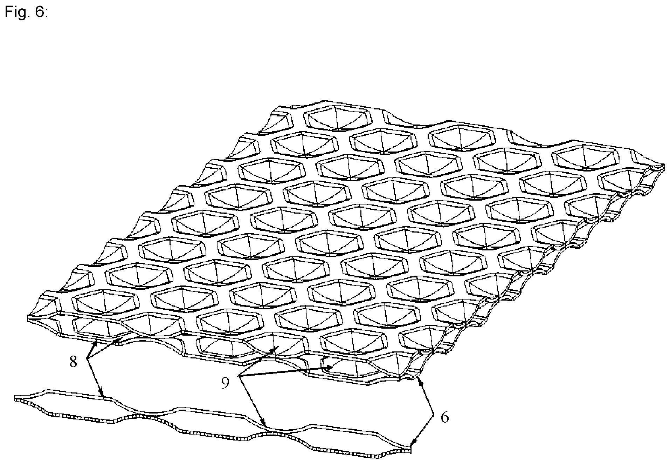

Fig. 6 zeigt ein bevorzugtes Leichtbauelement/Schichtelement, welches aus zwei strukturierten Schalen, insbesondere Blechen besteht. Die strukturierten Schalen/Strukturbleche 6 weisen Versteifungselemente 9 insbesondere wabenförmiger (hexagonaler) Grundgeometrie, umfasst von Stegen 8 auf. Die strukturierten Schalen/Strukturbleche 6 können vorteilhafterweise an den Versteifungselementen 9 verbunden werden, wobei eine punktuelle oder flächige Verbindung erfolgen kann. Das Schichtelement, umfassend zwei strukturierte Schalen/Bleche 6 besitzt eine hohe Steifigkeit und ein geringes Gewicht.

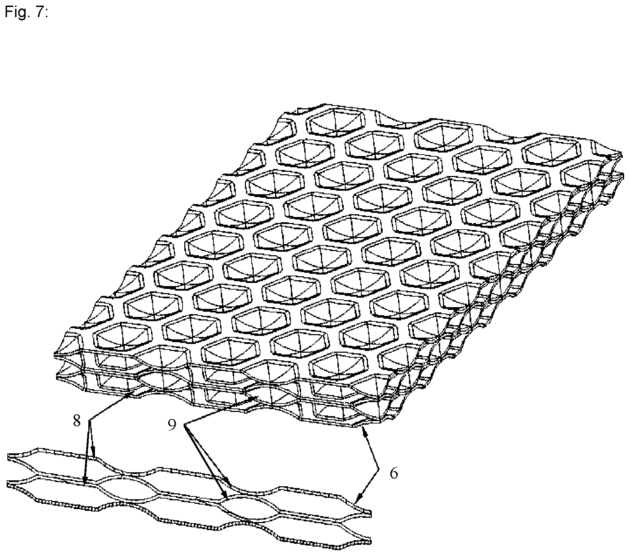

Fig. 7 stellt eine weitere bevorzugte Ausführungsform des Leichtbauelementes/Schichtelementes dar, bei dem das Schichtelement aus mehreren strukturierten Schalen, insbesondere Strukturblechen besteht. Die strukturierten Schalen/Strukturbleche 6 weisen Versteifungselemente 9 insbesondere wabenförmiger (hexagonaler) Grundgeometrie umfasst von Stegen 8, auf. Durch die Versteifungselemente 9 besitzt das Schichtelement eine hohe Steifigkeit, trotz eines geringen Gewichtes. Die Hohlräume, die durch die Versteifungselemente 9, insbesondere mit wabenförmiger (hexagonaler) Grundgeometrie gebildet werden, können zur Integration von Elementen, umfassend Kabel oder elektrische und/oder elektronische Bauteile genutzt werden. Durch die bevorzugte Ausführungsform werden vorteilhafterweise Hohlräume in mehreren Schichten bereitgestellt. Weiterhin wird durch die Hohlräume, eine Luftpolsterung erreicht, die eine optimale Isolierung gegen Wärme und Geräusche bewirkt.

Fig. 8 zeigt die Schichtdicke (h), die sich aus der inneren Höhe des Versteifungselements (t) und der Schalendicken (s) ergibt.

### Bezugszeichenliste

- 1: Werkzeug
- 2: Materialbahn
- 3: Matrize
- 4: Membran
- 5: Wirkmedium
- 6: strukturierte Schale/Strukturblech
- 7: unstrukturierte Schale/Glattblech
- 8: Stege
- 9: Versteifungselemente

## Patentansprüche

1. Schichtelement aus wenigstens zwei Schichten (6, 7), wobei mindestens eine erste Schicht (6) eine strukturierte Schale (6) ist und diese mit einer zweiten glatten (7) oder strukturierten Schicht (7) mindestens bereichsweise übereinanderliegend verbunden ist, **dadurch gekennzeichnet, dass**
die erste strukturierte Schicht (6) Versteifungselemente ohne ebenflächige Abschnitte insbesondere wabenförmige Formen umfasst, die von Stegen (8) voneinander getrennt sind.

2. Schichtelement nach Anspruch 1,
**dadurch gekennzeichnet, dass**
es zwei Schichten aus Blechen aufweist.

3. Schichtelement nach Anspruch 1 oder 2,
**dadurch gekennzeichnet, dass**
eine der Schichten aus einem eisenhaltigen und die andere Schicht aus einem nicht eisenhaltigen Metall gefertigt ist.

4. Schichtelement nach Anspruch 1 oder 2,
**dadurch gekennzeichnet, dass**
die Bleche aus dem gleichen Material sind, bevorzugt Stahl, besonders bevorzugt rostfreier Stahl.

5. Schichtelement nach einem der vorhergehenden Ansprüche,
**dadurch gekennzeichnet, dass**
die beiden Bleche, bevorzugt Stahlbleche miteinander verschweißt vorliegen.

6. Schichtelement nach einem der vorhergehenden Ansprüche, **dadurch gekennzeichnet, dass** einen Schicht ein partiell gelochtes Blech/ Material ist.

7. Verfahren zur Herstellung eines Schichtelements nach einem der vorhergehenden Ansprüche, aufweisend folgende Schritte:
a) Bereitstellung einer eine strukturierte Oberfläche aufweisenden ersten Schicht (6) als eine strukturierte Schale, wobei die strukturierte Schale mittels Hydroforming erzeugt wird, und einer eine glatte oder strukturierte Schale aufweisenden zweiten Schicht (6, 7),
b) Verbinden der ersten und der zweiten Schicht (6, 7), wobei die Schichten bereichsweise übereinanderliegend verbunden werden und die erste/oder die zweite Schicht wenigstens ein Versteifungselement (9) insbesondere wabenförmiger (hexagonaler) Grundgeometrie umfasst von Stegen (8) aufweist und die beiden Schichten bevorzugt mittels Widerstandspunktschweißen miteinander verbunden werden.

8. Verfahren nach dem vorhergehenden Anspruch,
**dadurch gekennzeichnet, dass**
die Schichten aus Blech gefertigt werden.

9. Verwendung des Schichtelementes nach einem der Ansprüche 1- 6 als Leichtbauelement, insbesondere als Halbzeug.

10. Verwendung eines Leichtbauelements nach dem vorhergehenden Anspruch als Bauelement, insbesondere als Wandelement, Bodenelement, Deckenelement und/oder Element einer Karosserie eines Fahrzeuges.

## Claims

1. A layer element comprising at least two layers (6, 7), wherein at least one first layer (6) is a textured shell (6) and which is connected, overlapping at least in some areas, with a second smooth (7) or textured layer (7), **characterised in that**
the first textured layer (6) comprises stiffening elements without planar sections, in particular honeycomb shapes, which are separated from one another by bars (8).

2. The layer element according to claim 1,
**characterised in that**
it comprises two layers made from sheet metal.

3. The layer element according to claim 1 or 2,
**characterised in that**
one of the layers is made from a ferrous metal and the other layer is made from a non-ferrous metal.

4. The layer element according to claim 1 or 2,
**characterised in that**
the sheets are made from the same material, preferably steel, particularly preferably stainless steel.

5. The layer element according to any of the preceding claims, **characterised in that**
the two sheets, preferably steel sheets, are welded to one another.

6. The layer element according to any of the preceding claims, **characterised in that** one layer is a partially perforated sheet/material.

7. A method for producing a layer element according to any of the preceding claims, comprising the following steps:
a) Providing of a first layer (6) having a textured surface as a textured shell, wherein the textured shell is created through hydroforming, and a second layer (6, 7) having a smooth or textured shell,
b) Connecting the first and second layers (6, 7), wherein the layers are connected in some areas in an overlapping manner and the first/or the second layer has at least one stiffening element (9), in particular of honeycomb (hexagonal) basic geometry, encompassed by bars (8), and the two layers are preferably connected to one another by means of resistance spot welding.

8. The method according to the preceding claim,
**characterised in that**
the layers are manufactured from sheet metal.

9. Use of the layer element according to any of claims 1-6 as a lightweight element, in particular as a semi-finished product.

10. Use of a lightweight element according to the preceding claim as a component, in particular as a wall element, floor element, ceiling element and/or element in the bodywork of a vehicle.

## Revendications

1. Élément de couche d'au moins deux couches (6, 7), dans lequel au moins une première couche (6) est une coque structurée (6) et celle-ci est reliée au moins par endroits par superposition à une seconde couche lisse (7) ou structurée (7), **caractérisé en ce que**
la première couche structurée (6) comporte des éléments de renforcement sans sections à surface plane, en particulier des formes alvéolées qui sont séparées les unes des autres par des entretoises (8).

2. Élément de couche selon la revendication 1,
**caractérisé en ce**
**qu'**il présente deux couches de tôles.

3. Élément de couche selon la revendication 1 ou 2,
**caractérisé en ce**
**qu'**une des couches est fabriquée en un métal contenant du fer et l'autre couche est fabriquée en un métal ne contenant pas de fer.

4. Élément de couche selon la revendication 1 ou 2,
**caractérisé en ce que**
les tôles sont fabriquées à partir du même matériau de préférence d'acier, de manière particulièrement préférée d'acier inoxydable.

5. Élément de couche selon l'une quelconque des revendications précédentes,
**caractérisé en ce que**
les deux tôles, de préférence des tôles d'acier se présentent soudées l'une à l'autre.

6. Élément de couche selon l'une quelconque des revendications précédentes, **caractérisé en ce qu'**une couche est une tôle/un matériau partiellement troué.

7. Procédé de fabrication d'un élément de couche selon l'une quelconque des revendications précédentes, présentant les étapes suivantes :
a) la mise à disposition d'une première couche (6) présentant une surface structurée comme une coque structurée, dans lequel la coque structurée est générée par hydroformage, et une seconde couche (6, 7) présentant une coque lisse ou structurée,
b) la liaison de la première et la seconde couche (6, 7), dans lequel les couches sont reliées par endroits par superposition et la première et/ou la seconde couche comporte au moins un élément de renforcement (9) en particulier une géométrie de base alvéolée (hexagonale) d'entretoises (8) et les deux couches sont reliées entre elles de préférence par soudage par points de résistance.

8. Procédé selon la revendication précédente,
**caractérisé en ce que**
les couches sont fabriquées en tôle.

9. Utilisation de l'élément de couche selon l'une des revendications 1 à 6 comme élément de construction léger, en particulier comme demi-produit.

10. Utilisation d'un élément de construction léger selon la revendication précédente comme élément de construction, en particulier comme élément de paroi, élément de fond, élément de plafond et/ou élément d'une carrosserie d'un véhicule.
